(19)

Europäisches Patentamt

European Patent Office

Office européen des brevets

(11) **EP 4 389 391 A1**

(12) **EUROPEAN PATENT APPLICATION**
published in accordance with Art. 153(4) EPC

(43) Date of publication:
**26.06.2024 Bulletin 2024/26**

(21) Application number: **22858403.3**

(22) Date of filing: **10.08.2022**

(51) International Patent Classification (IPC):
**B29C 45/76** (2006.01)

(52) Cooperative Patent Classification (CPC):
**B29C 45/76**

(86) International application number:
**PCT/JP2022/030523**

(87) International publication number:
**WO 2023/022082 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.08.2021  JP 2021132547**

(71) Applicant: **Nissei Plastic Industrial Co., Ltd.
Hanishina-gun, Nagano 389-0693 (JP)**

(72) Inventor: **KOZUKA Makoto
Hanishina-gun, Nagano 389-0693 (JP)**

(74) Representative: **Haseltine Lake Kempner LLP
Cheapside House
138 Cheapside
London EC2V 6BJ (GB)**

(54) **MOLDING ASSISTANCE DEVICE FOR INJECTION MOLDING MACHINE**

(57)    A molding assistance device includes: a resin item selection section 6 for selecting an item Drc relating to a type of resin and an item Drm relating to a predetermined physical property of the resin from resin data Dr set in a resin data setting section Fmr, a physical property value input section 7 for inputting a plurality of different resin temperatures Et relating to the selected resin and physical property values Em corresponding to the respective resin temperatures Et; a physical property value conversion section 8 for obtaining a physical property value Em corresponding to any resin temperature Et; and a data conversion processing functional section Fe which operates, when a molten state is estimated, so as to provide to a calculation processing functional section Fe a resin temperature Et at the time of the estimation and a physical property value Em corresponding to the resin temperature Et and obtained by the physical property value conversion section 8.

**Fig.1**

## Description

### Technical Field

0001 The present invention relates to a molding assistance device for an injection molding machine which is preferably used to provide molding assistance for an injection molding machine which injects plasticized molten resin by means of a screw into a mold to fill the mold with the resin, thereby performing molding.

### Background Art

0002 Generally, an injection molding machine performs a molding operation by injecting plasticized molten resin by means of a screw into a mold to fill the mold with the resin. Thus, whether or not the molten resin can be maintained in an appropriate molten state is an important factor to secure a desirable molding quality. In particular, in the case where plasticization is insufficient, the insufficient plasticization of the molten resin results in a high solid phase rate (unmelted polymer fraction), which causes problems such as lowering of moldability and lowering of molding quality. In the case where plasticization proceeds excessively, the resin decomposition rate (carbonization generation rate) increases, which causes problems such as degeneration of of molten resin and generation of unnecessary gas. Therefore, a technique has been proposed to grasp the state of molten resin in a heating cylinder, thereby enabling performance of necessary countermeasure processing.

0003 Conventionally known techniques of this type are a plasticization simulation device disclosed in Patent Literature 1 and a molding assistance device for an injection molding machine disclosed in Patent Literature 2. The plasticization simulation device disclosed in Patent Literature 1 performs physical quantity calculation processing of calculating at least one physical quantity selected from solid phase rate, temperature, pressure, and plasticization capacity by reference to resin physical properties of a material used in a screw-type plasticization device, operation conditions of the plasticization device, and configuration data of the plasticization device and by using a screw characteristic equation, a mass conservation equation, and an energy conservation equation. In particular, the plasticization simulation device includes an analyzing section which calculates the physical quantity in a state in which the screw is rotating by physical quantity calculation processing, and calculates the physical quantity in a state in which the screw is stopped by using the calculated physical quantity and by using the screw characteristic equation, the mass conservation equation, and the energy conservation equation.

0004 The object of the molding assistance device disclosed in Patent Literature 2 is to enable a novice operator to improve the yield of molded products and molding quality. Specifically, the molding assistance device has a basic data input section for inputting basic data, including molding conditions data relating to molding conditions and screw data related to the form of a screw; a calculation expression data setting section in which solid phase rate calculation expression data for calculation of the solid phase rate of molten resin in a heating cylinder on the basis of the basic data are set; a calculation processing functional section including a solid phase rate calculation processing section for obtaining an estimated solid phase rate of the molten resin at the time of completion of metering through calculation processing on the basis of the basic data and the solid phase rate calculation expression data; and an output processing functional section which performs display processing for displaying on a display a piece of information relating to the estimated solid phase rate.

### Prior Art Publications

### Patent Publications

0005

Patent Literature 1: JP2015-123668A
Patent Literature 2: WO2019-188998

## Disclosure of the Invention

### Problem to be Solved by the Invention

0006 However, the above-described conventional technique for grasping (estimating) the molten state of resin has the following problem to be solved.

0007 Namely, in the case where physical property values peculiar to resin (e.g., specific heat, thermal conductivity, decomposition rate, water absorption) are used for estimation of the molten state, their standard values published, for example, as catalog values, from the manufacturers are used not infrequently.

**0008** Meanwhile, since actual physical property values change with the temperature of resin, an unignorable error is produced between the molten state determined on the basis of the actual resin temperature and the molten state estimated by using the standard values. Therefore, conventionally, in the case where estimation processing for representing the molten state by using an estimated solid phase rate or the like is performed, an operator reduces the error to a possible extent by correcting (revising) the estimated solid phase rate or the like.

**0009** However, such correction (revision) involves many factors which rely on the operator's intuition, experience, etc. and therefore, the conventional method has a drawback of not necessarily being sufficient from the viewpoint of accuracy (precision), objectivity, and reliability.

**0010** An object of the present invention is to provide a molding assistance device for an injection molding machine which has solved the above-described problem residing in the background art.

**Means for Solving the Problem**

**0011** The present invention provides a molding assistance device 1 for an injection molding machine comprising a resin data setting section Fmr in which resin data Dr relating to resin are set, a molding machine data setting section Fmm in which molding machine data Dm relating to a molding machine are set, a molding condition data setting section Fms in which molding condition data Ds relating to molding conditions are set, a calculation processing functional section Fc which estimates a molten state of plasticized resin on the basis of the resin data Dr, the molding machine data Dm, and the molding condition data Ds, and an output processing functional section Fo which visually displays on a display 5 the molten state estimated by the calculation processing functional section Fc. In order to solve the above-described problem, the molding assistance device is configured to comprise:

a resin item selection section 6 for selecting an item Drc relating to a type of resin and an item Drm relating to a predetermined physical property of the resin from the resin data Dr set in the resin data setting section Fmr;
a physical property value input section 7 for inputting a plurality of different resin temperatures Et relating to the selected resin and physical property values Em corresponding to the respective resin temperatures Et;
a physical property value conversion section 8 for obtaining a physical property value Em corresponding to any resin temperature Et; and
a data conversion processing functional section Fe which operates, when the molten state is estimated, so as to provide to the calculation processing functional section Fc a resin temperature Et at the time of the estimation and the physical property value Em corresponding to the resin temperature Et and obtained by the physical property value conversion section 8.

**0012** In this case, in preferred modes of the invention, the data conversion processing functional section Fe may have a function of displaying on the display 5 a detail data input screen Vie having the resin item selection section 6 and the physical property value input section 7. The physical property value conversion section 8 may have a function of performing conversion by using a function expression Fx obtained from physical property values corresponding to the plurality of different resin temperatures or a corrected function expression Fxe obtained by correcting the function expression Fx. Alternatively, the physical property value conversion section 8 may have a function of performing conversion by using a data table obtained from physical property values corresponding to the plurality of different resin temperatures or a corrected data table obtained by correcting the data table. Notably, in the calculation processing functional section Fc, when the data conversion processing functional section Fe is not used, a standard value set beforehand as the physical property value may be used. The calculation processing functional section Fc may have a function of estimating, as the molten state of plasticized resin, a solid phase rate (Xcs) of molten resin in a heating cylinder 4 on the basis of the resin data Dr, the molding machine data Dm, and the molding condition data Ds. The calculation processing functional section Fc may have a function of estimating, as the molten state of plasticized resin, a resin decomposition rate (Xrs) of a screw surface 3f during molding on the basis of the resin data Dr, the molding machine data Dm, and the molding condition data Ds.

**Effects of the Invention**

**0013** Significant effects as shown below are provided by the molding assistance device 1 for the injection molding machine according to the present invention described above.

**0014**

(1) The molding assistance device comprises the resin item selection section 6 for selecting the item Drc relating to the type of resin and the item Drm relating to the predetermined physical property of the resin from the resin data Dr set in the resin data setting section Fmr; the physical property value input section 7 for inputting a plurality of different resin temperatures Et relating to the selected resin and physical property values Em corresponding to the respective resin temperatures Et; the physical property value conversion section 8 for obtaining a physical property value Em corresponding to any resin temperature Et; and the data conversion processing functional section Fe which operates, when a molten state is estimated, so as to provide to the calculation processing functional section Fc a resin temperature Et at the time of the estimation and the physical property value Em corresponding to the resin temperature Et and obtained by the physical property value conversion section 8. Therefore, when the molten state of plasticized resins is estimated, an accurate physical property value corresponding to the resin temperature can be used. Thus, even a novice operator or the like who does not have much experience can quickly perform estimation of an accurate and precise molten state, because manual correction or alteration becomes unnecessary, can set accurate molding conditions, and can secure high molding quality.

(2) In a preferred mode in which the function of displaying on the display 5 the detail data input screen Vie having the resin item selection section 6 and the physical property value input section 7 is provided in the data conversion processing functional section Fe, since an operator (user) can easily input data, pieces of detail information owned by the user can be utilized for, for example, improvement of molding quality.

(3) In a preferred mode in which the function of performing conversion by using the function expression Fx obtained from physical property values corresponding to the plurality of different resin temperatures or the corrected function expression Fxe or the function of performing conversion by using the data table obtained from physical property values corresponding to the plurality of different resin temperatures or the corrected data table is provided in the physical property value conversion section 8, since the calculation function, etc. of the molding machine controller provided in the molding machine can be utilized, the conversion can be easily performed by using the function expression Fx (Fxe), the data table, etc.

(4) In a preferred mode in which, in the calculation processing functional section Fc, when the data conversion processing functional section Fe is not used, a standard value set beforehand as the physical property value is used, depending on the circumstances; i.e., whether or not the detail information relating to the resin is present, molding processing can be performed without fail even when the detail information relating to the resin is not present.

(5) In a preferred mode in which the function of estimating, as the molten state of plasticized resin, the solid phase rate (Xcs) of molten resin in the heating cylinder 4 on the basis of the resin data Dr, the molding machine data Dm, and the molding condition data Ds is contained in the calculation processing functional section Fc, in particular, an accurate physical property value of resin can be applied to the estimated solid phase rate Xcs of the molten resin in the heating cylinder 4. Therefore, an accurate and precise estimated solid phase rate Xcs can be obtained.

(6) In a preferred mode in which the function of estimating, as the molten state of plasticized resin, a resin decomposition rate (Xrs) of the screw surface 3f during molding on the basis of the resin data Dr, the molding machine data Dm, and the molding condition data Ds is contained in the calculation processing functional section Fc, in particular, an accurate physical property value of resin can be applied to the estimated resin decomposition rate Xrs of the screw surface 3f during molding. Therefore, an accurate and precise estimated resin decomposition rate Xrs can be obtained.

**Brief Description of the Drawings**

0020

[FIG. 1] View showing a detail data input screen of a display provided in a molding assistance device according to a preferred embodiment of the present invention.

[FIG. 2] Block system diagram of an injection molding machine including the molding assistance device.

[FIG. 3] View showing a basic data input screen of the display provided in the molding assistance device.

[FIG. 4] Illustration used for describing a function expression creating function provided in the molding assistance device.

[FIG. 5] Illustration used for describing the function expression creating function provided in the molding assistance device for the case where correction is performed.

[FIG. 6] Flowchart for describing the processing procedure of a data conversion processing function of the molding assistance device.

[FIG. 7] Flowchart for describing the processing procedure of a function expression creating function in the data change processing function.

[FIG. 8] Flowchart for describing the processing procedure of an exemplary molding assistance method performed using the molding assistance device.

[FIG. 9] View showing an output screen of the display based on the exemplary molding assistance method performed using the molding assistance device.

[FIG. 10] Graph for describing an output screen used in the exemplary molding assistance method performed using the molding assistance device.

## Description of Reference Numerals

0021 1: molding assistance device, 3f: screw surface, 4: heating cylinder, 5: display, 6: resin item selection section, 7: physical property value input section, 8: physical property value conversion section, Dr: resin data, Dm: molding machine data , Ds: molding condition data, Drc: item relating to the type of resin, Drm: item relating to a predetermined physical property, Et: resin temperature, Em: physical property value, Fc: calculation processing functional section, Fo: output processing functional section, Fe: data conversion processing functional section, Fmr: resin data setting section, Fmm: molding machine data setting section, Fms: molding condition data setting section, Fx: function expression, Fxe: corrected function expression, Vie: detail data input screen, Xcs: (estimated) solid phase rate, Xrs: (estimated) resin decomposition rate

## Best Mode for Carrying Out the Invention

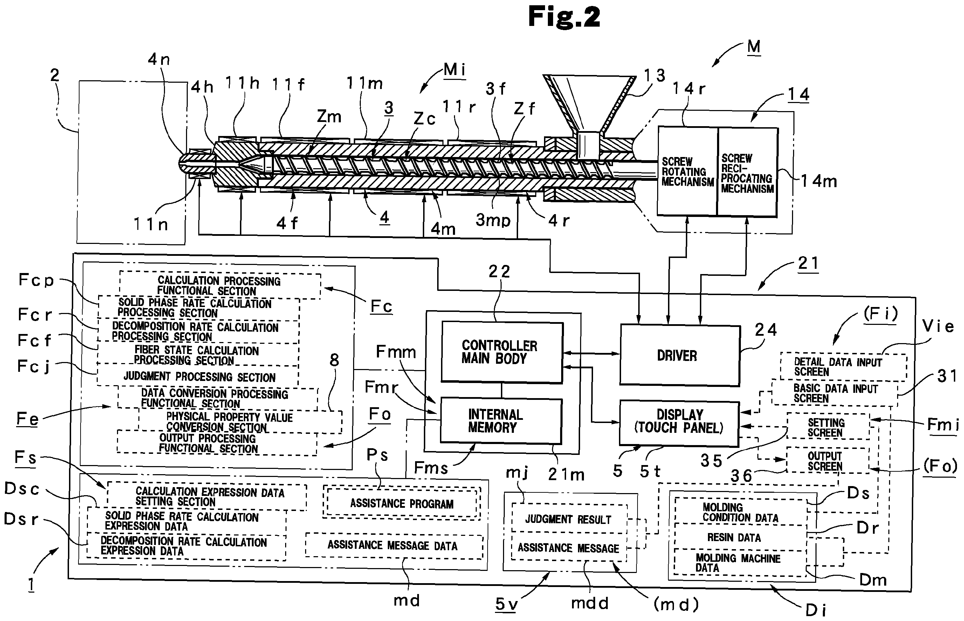

0022 Next, the best embodiment of the present invention will be described with reference to the drawings.
0023 First, in order to facilitate understanding of a molding assistance device 1 according to the present embodiment, an injection molding machine M for which the molding assistance device 1 can be used will be described with reference to FIG. 2.
0024 FIG. 2 shows the injection molding machine M and in particular, an injection device Mi, in which a clamping device is omitted. In the injection device Mi, reference numeral 4 denotes a heating cylinder. A nozzle 4n is fixedly attached to a forward end portion of this heating cylinder 4 via a head portion 4h. The heating cylinder 4 has a hopper 13 at the upper side of a rear end thereof. The nozzle 4n has a function of injecting molten resin in the heating cylinder 4 to a metal mold 2 shown by an imaginary line. The hopper 13 has a function of supplying a resin material (resin pellets) to the interior of the heating cylinder 4.
0025 A screw 3 is disposed in the heating cylinder 4 in such a manner that the screw 3 can be rotated and reciprocated freely. A spiral flight portion 3mp is formed on the surface of the screw 3. The screw surface 3f is coated with a predetermined surface material (metal) chosen in consideration of durability, etc. This screw 3 has a metering zone Zm, a compression zone Zc, and a feed zone Zf in this order from the forward side to the rear side. A screw driving section 14 is coupled to a rear end portion of the screw 3. The screw driving section 14 includes a screw rotating mechanism 14r for rotating the screw 3 and a screw reciprocating mechanism 14m for moving the screw 3 forward and rearward. Notably, the screw rotating mechanism 14r and the screw reciprocating mechanism 14m may be driven by any driving method such as a hydraulic method using a hydraulic circuit or an electrical method using an electric motor.
0026 The heating cylinder 4 has a heating cylinder forward portion 4f, a heating cylinder middle portion 4m, and a heating cylinder rear portion 4r in this order from the forward side to the rear side. A forward portion heating section 11f, a middle portion heating section 11m, and a rear portion heating section 11r are respectively provided on the outer circumferential surfaces of these portions 4f, 4m, and 4r. Similarly, a head heating section 11h is provided on the outer circumferential surface of the head portion 4h, and a nozzle heating section 11n is provided on the outer circumferential surface of the nozzle 4n. Each of these heating sections 11f, 11m, 11r, 11h, and 11n may be composed of a band heater or the like.
0027 Reference numeral 21 denotes a molding machine controller which performs overall control of the injection molding machine M. The molding machine controller 21 includes a controller main body 22 which includes pieces of hardware such as a CPU and an accompanying internal memory 21m and has a computer function. A display 5 accompanying the controller main body 22 is connected to a connection port of the controller main body 22, and a driver 24 for driving (operating) various actuators is connected to the connection port. In this case, the display 5 can display required pieces of information and includes a touch panel 5t. This touch panel 5t can be used to perform various operations such as input, setting, and selection operations. The screw rotating mechanism 14r and the screw reciprocating mechanism 14m described above are connected to the driver 24, and the respective heating sections 11f, 11m, 11r, 11h, and 11n are connected to the driver 24. This allows the controller main body 22 to control, via the driver 24, the driving of the screw rotating mechanism 14r and the screw reciprocating mechanism 14m and to control the energization of the respective heating sections 11f, 11m, 11r, 11h, and 11n.
0028 Thus, the molding machine controller 21 includes an HMI (human-machine interface) control system and a PLC (programmable logic controller) control system. The internal memory 21m stores therein a PLC program and an HMI program. Notably, the PLC program is a piece of software for realizing, for example, sequence operations of various steps in the injection molding machine M and monitoring of the injection molding machine M. The HMI program is a piece of software for realizing, for example, setting and display of operation parameters of the injection molding machine M and display of operation monitoring data of the injection molding machine M.

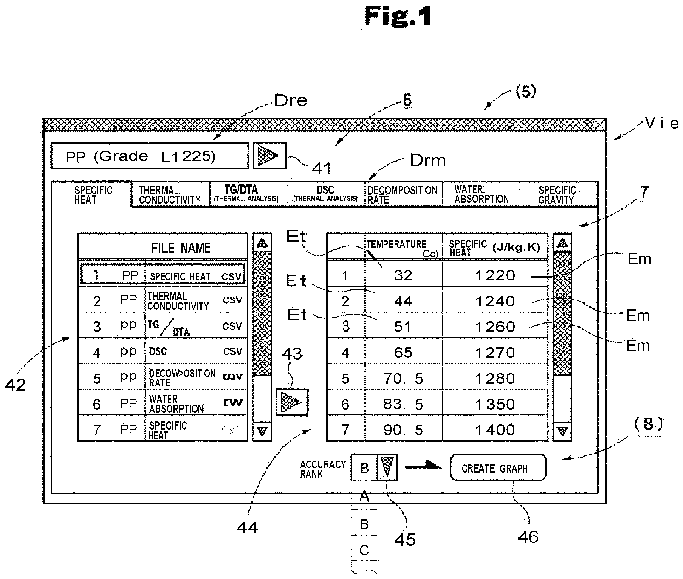

0029 Next, the configuration of the molding assistance device 1 according to the present embodiment that can be used for such an injection molding machine M will be described with reference to FIG. 1 to FIG. 5.

0030 The molding assistance device 1 according to the present embodiment is configured by using the controller main body 22 and the display 5, which constitute the above-described molding machine controller 21. Therefore, the internal memory 21m of the controller main body 22 stores therein an assistance program Ps (an application program) which allows the molding assistance device 1 to function.

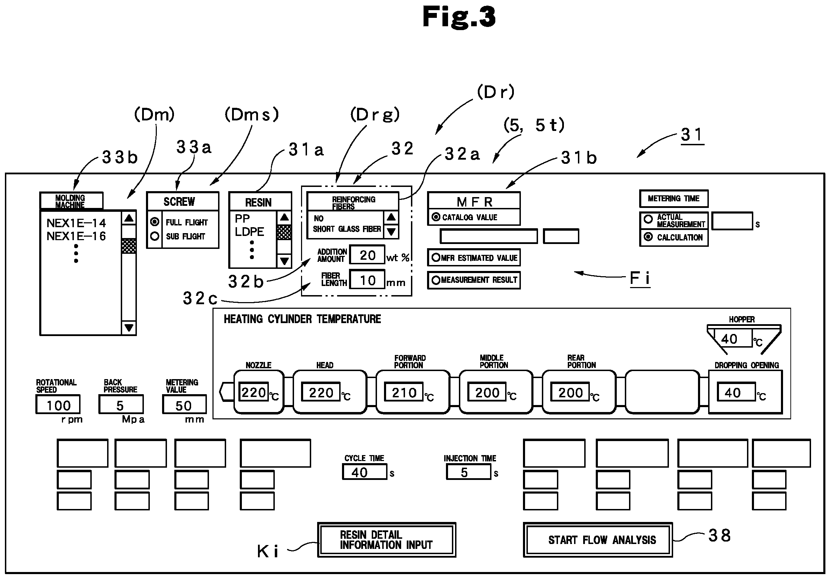

0031 The molding assistance device 1 has a basic data input screen 31 shown in FIG. 3 (FIG. 2) and used to input basic data. This basic data input screen 31 is displayed on the screen of the display 5 when the assistance program Pa is started. Since the touch panel 5t is added to the display 5, input and selection of various data and other operations can be performed by using the touch panel 5t.

0032 FIG. 3 shows an exemplary layout of the basic data input screen 31. The basic data input screen 31 includes a data input section Fi in an upper part thereof. This data input section Fi allows input of resin data Dr and includes a resin selection section 31a, a flowability input section 31b, and a reinforcing fiber input section 32. The resin selection section 31a is used to input the resin data by selecting the type of resin. The flowability input section 31b is used to input the flowability (MFR) of molten resin. The reinforcing fiber input section 32 is used to input pieces of information relating to reinforcing fibers. The inputted resin data Dr are set in a resin data setting section Fmr in the internal memory 21m.

0033 The reinforcing fiber input section 32 includes a fiber type input section 32a for inputting the type of the reinforcing fibers, an addition amount input section 32b, and a fiber length input section 32c. The reinforcing fiber data Drg are inputted by using these input sections. In the case where, as described above, data representing the type of the reinforcing fibers, the amount of the reinforcing fibers added to the resin, and the fiber length are contained in the reinforcing fiber data Drg, since the reinforcing fiber data Drg can sufficiently cover elements for visualization of the reinforcing fibers, the change state (breakage state, etc.) of the reinforcing fibers, contained in the molten state of molten resin, can be grasped accurately.

0034 A screw selection section 33a for selecting the type of the screw and a molding machine selection section 33b for selecting the type of the molding machine are provided so as to input molding machine data Dm. By selecting the type of the molding machine, heating cylinder data, etc. which relate to the molding machine are selected. Notably, as a result of input of the screw data Dms, a plurality of various data relating to the screw are selected, which include data relating to various dimensions (e.g., a screw outer diameter, a screw flight width, a friction coefficient between a piece of solid matter and the screw, a screw groove depth, a screw width direction length, a screw lead, a flight coefficient, a screw flight torsion angle, and a pitch number) and data relating to the type of material of the screw surface 3f. In particular, in the case where the data relating to the type of material of the screw surface 3f is contained in the screw data Dms, since causes of degradation (e.g., the catalyst effect by the metal material of the screw surface 3f on molten resin and easiness of adhesion) can be reflected on calculation of an estimated resin decomposition rate Xrs, a more accurate (precise) estimated resin decomposition rate Xrs can be obtained. The inputted molding machine data Dm are set in a molding machine data setting section Fmm in the internal memory 21m.

0035 Incidentally, in the case where the resin data Dr are set by using such a basic data input screen 31, the type of resin can be selected by using the resin selection section 31a. Conventionally, upon selectin of the type of resin, as to physical property values peculiar to the resin (i.e., specific heat, thermal conductivity, etc. corresponding to the resin), their standard values are set at the same time on the basis of, for example, catalog values published from the manufacturers.

0036 However, since the actual physical property values change depending on an environment in which the resin is placed; in particular, the temperature of the resin, an unignorable error is produced between the molten state determined on the basis of the actual resin temperature and the molten state estimated by using the standard values.

0037 In order to solve the above-described problem, in the present invention (the present embodiment), the following configuration is employed. Specifically, a resin detail information input key Ki is provided on the basic data input screen 31 shown in FIG. 3. When this resin detail information input key Ki is touched (is turned ON), a detail data input screen Vie shown in FIG. 1 is displayed. By using this detail data input screen Vie, a plurality of different resin temperatures Et and physical properties Em corresponding to the respective resin temperatures Et can be inputted. Furthermore, when the molten state is estimated, as shown in FIG. 2, a data conversion processing functional section Fe provided in the molding machine controller 21 obtains accurate physical properties Em corresponding to any resin temperature Et on the basis of these input data.

0038 The detail data input screen Vie shown in FIG. 1 has a resin item selection section 6 in its upper part. This resin item selection section 6 allows selection of an item Drc relating to the type of the resin from the resin data Dr set in the resin data setting section Fmr and selection of an item Drm relating to a predetermined physical property of the selected resin. Also, the detail data input screen Vie has a physical property value input section 7 in a lower part of the screen; i.e., the lower side of the resin item selection section 6. This physical property value input section 7 allows input of a plurality of different resin temperatures Et relating to the selected resin and input of physical property values Em corresponding to the respective resin temperatures Et.

0039 In the case, as described above, the data conversion processing functional section Fe is provided, and a function of displaying on the display 5 the detail data input screen Vie having the resin item selection section 6 and the physical property value input section 7 is provided in the data conversion processing functional section Fe, since an operator (user) can easily input data, pieces of detail information owned by the user can be utilized for, for example, improvement of molding quality.

0040 Meanwhile, as shown in FIG. 2, the molding machine controller 21 includes a physical property value conversion section 8, which constitutes a portion of the data conversion processing functional section Fe. A physical property value Em corresponding to any resin temperature Et can be obtained by using this physical property value conversion section 8. Namely, the physical property value conversion section 8 is configured to obtain a physical property value Em corresponding to any resin temperature Et by using a function expression Fx, which is obtained from physical property values corresponding to the plurality of different resin temperatures, or by using a corrected function expression Fxe. Thus, the physical property value set by using its standard value is converted to an accurate physical property value Em corresponding to the resin temperature Et on the basis of the function expression Fx (Fxe), and the converted physical property value Em is provided to a calculation processing functional section Fc which performs processing of estimating the molten state. Therefore, the accurate physical property value Em is utilized for the estimation processing by the calculation processing functional section Fc.

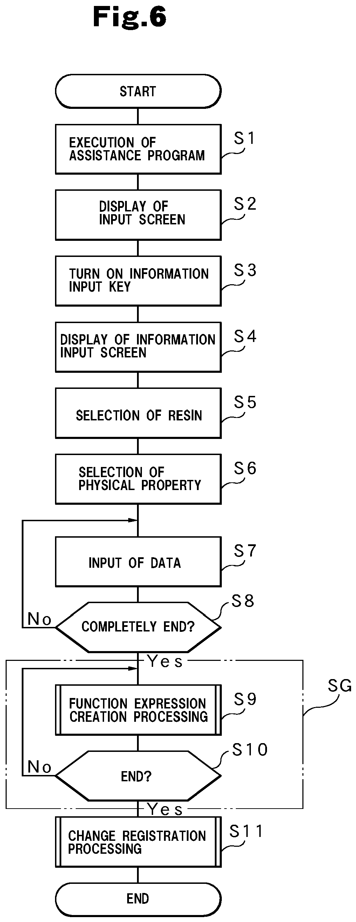

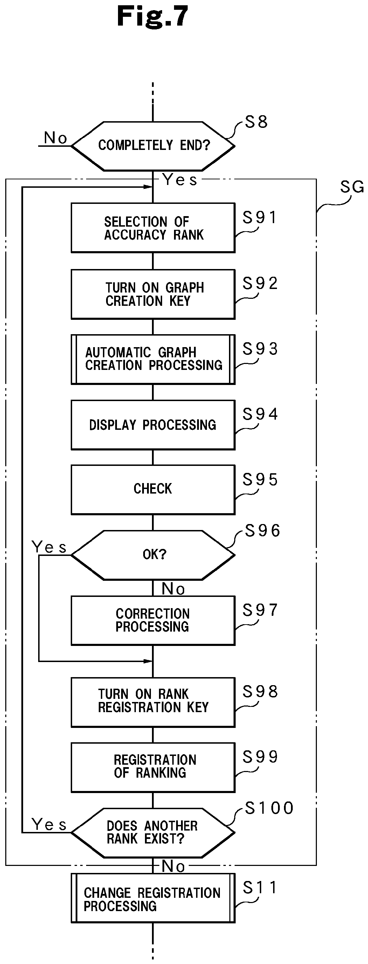

0041 Next, the function of the data conversion processing functional section Fe will be described in accordance with flowcharts shown in FIGS. 6 and 7 and with reference to FIGS. 1 to 5.

0042 Now, the case where the user (operator) owns a piece of detail information relating to, for example, the specific heat [J/kg•K] of resin "PP (polypropylene)" is assumed. Such a piece of detail information contains, for example, data obtained by the user his/herself through an experiment or the like and pieces of information obtained from the manufacturer side. Therefore, there is assumed, for example, the case where the user recognizes the piece of detail information as a piece of information which greatly affects the quality, etc. of molded products and wishes to utilize the piece of detail information as important data at the time of estimation for knowing the molten state of resin.

0043 The operator first executes (starts up) an assistance program Pc (step S1). As a result, the basic data input screen 31 shown in FIG. 3 is displayed on the display 5 (step S2). In the present invention (the present embodiment), since the resin detail information input key Ki is provided on the basic data input screen 31, the operator touches (turns ON) this resin detail information input key Ki (step S3). As a result, the detail data input screen Vie shown in FIG. 1 is window-displayed on the display 5 (step S4).

0044 The operator selects an item Drc relating to the type of resin to be used by touching a selection key 41 of the detail data input screen Vie (step S5). The illustrated example shows the case where "PP (Grade L1225)" has been selected. Other example of the item Drc relating the resin type include other various types of resins and grades corresponding to these resins. Also, the operator selects an item Drm relating to a predetermined physical property of the selected resin (step S6). The illustrated example shows the case where "specific heat " has been selected. Examples of the item Drm relating to the predetermined physical property include not only "specific heat" but also "thermal conductivity," "results of simultaneous thermogravimetry/differential thermal analysis (TG/DTA)," "results of measurement by a differential scanning calorimeter (DSC)," "decomposition rate," "water absorption," "specific gravity," etc. As a result, a specific physical property value input section 7 shown in FIG. 1 is displayed. The operator selects a more specific file name by using a file selection section 42. The illustrated example shows the case where a "PP specific heat (CSV file)" listed as No. 1 has been selected. Notably, since files of various formats such as CSV files, TXT files, etc. can be used, the type of physical property corresponding to each file can be selected. As a result, a data input column 44 is displayed. The operator inputs data representing a plurality of different resin temperatures Et relating to the selected resin, physical property values Em corresponding to the resin temperatures Et, etc. (step S7).

0045 In this case, a CSV file has been selected, the above-described data can be inputted, for example, by transferring a CSV file (data) stored in a USB memory or the like. Specifically, after having selected the above-described "PP specific heat (CSV file)," the operator touches an input key 43. As a result, a plurality of different resin temperatures Et and physical property values Em corresponding to the respective resin temperatures Et are inputted in the data input column 44. It is possible to utilize other various inputting methods such as manual input by the operator, transmission from the outside by radio communication means, and transfer from various types of media other than USB memories. When the input of data completely ends (step S8), function expression creating processing of creating a function expression Fx is performed (step S9).

0046 A specific processing procedure (sub-routine) of the function expression creating processing (step SG) shown in FIG. 6 is shown as a flowchart in FIG. 7.

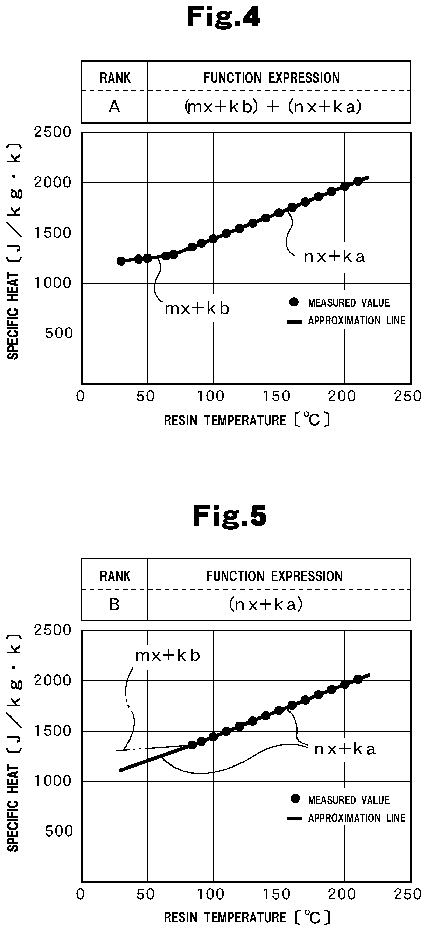

0047 When the input of data by using the above-described detail data input screen Vie completely ends (step S8), the operator selects an accuracy of conversion to a function expression by using an accuracy selection section 45 provided at the lowest potion of the detail data input screen Vie (step S91). In the illustrated accuracy selection section 45, the accuracy is ranked as "A," "B," "C," etc. in descending order of accuracy. However, the accuracy may be ranked by the order of the function expression such as "first order expression," "second-order expression," "third-order expression," ... "sixth-order expression." After having selected the accuracy rank by using the accuracy selection section 45, the operator touches (turns ON) a graph creation key 46 (step S92). As a result, a graph shown in FIG. 4 is automatically created. FIGS. 4 and 5 show graphs used for describing the function of creating a function expression. FIG. 4 shows an example in which a characteristic curve representing the relation between resin temperature [°C] and specific heat [J/kg ·K] is converted to a function expression Fx without any correction, and FIG. 5 shows an example in which a function expression Fxe is obtained by correcting the function expression Fx shown in FIG. 4.

0048 The graph shown in FIG. 4 as an example is for the case where the highest "A" rank has been selected. In the physical property value conversion section 8 shown in FIG. 2, the function expression Fx is created by combining two linear (first order) functions "mx + kb" and "nx + ka" on the basis of that graph. This function expression Fx is displayed as a graph as shown in FIG. 4 (step S94). The operator then checks the displayed graph sown in FIG. 4 (step S95). When the operator determines that the displayed function expression Fx is good, the operator touches an unillustrated rank registration key, thereby registering (temporarily registering) the rank (steps S96, S98, and S99).

0049 In contrast, in the case where the operator wishes to correct the displayed graph (function expression); for example, in the case where the operator wishes to select the "B" rank (reselection of an accuracy rank), in consideration of the type of resin, molded products, etc., the operator returns to the detail data input screen Vie shown in FIG. 1 and selects the "B" rank. As a result, a corrected function expression Fxe shown in FIG. 5 can be displayed (steps S96 and S97). In the example shown in FIG. 5, the corrected function expression Fxe is created by using a simplified linear (first order) function "nx + ka" only.

0050 Such a function expression Fx may be created for a single rank. Alternatively, a plurality of such function expressions Fx may be created for a plurality of different ranks corresponding to, for example, the grades of molded products and are selectively used when necessary. Therefore, it is possible to register a plurality of different function expressions Fx (Fxe) for different accuracy ranks by selecting different accuracy ranks one after another by using the accuracy selection section 45 and performing the same function expression creation processing (step S100, S91, etc.).

0051 FIGS. 4 and 5 illustrate the simplest case as an example and do not coincide with FIG. 1. In actuality, not only a first-order function but also a second-order function, an n-th order function, etc. are combined, the operator can use the conversion function while selecting different ranks. Notably, FIGS. 4 and 5 show the case where the function expression Fx or the corrected function expression Fxe is used. However, the above-described conversion may be performed by using a data table which can perform the conversion in the same manner; namely, a data table obtained from physical property values corresponding to a plurality of different resin temperatures or a corrected data table. In the case where, as described above, the function of performing conversion by using the function expression Fx obtained from physical property values corresponding to a plurality of different resin temperatures or the corrected function expression Fxe, or the function of performing conversion by using the data table obtained from physical property values corresponding to a plurality of different resin temperatures or the corrected data table, is provided in the physical property value conversion section 8, since the calculation function, etc. of the molding machine controller provided in the molding machine can be utilized, the conversion can be easily performed by using the function expression Fx (Fxe), the data table, etc.

0052 After the above-described function expression Fx (Fxe) or the data table has been created, the operator touches an unillustrated change registration key so as to perform change registration processing (steps S10 and S11). Notably, in the case where the change registration processing is not performed; namely, the data conversion processing functional section Fe according to the present embodiment is not used, a single physical property value registered as a standard value is used. For example, in the case where "specific heat" is used as a physical property, the single value of "specific heat" registered as a standard value is used. However, in the case where the change registration processing based on the data conversion processing functional section Fe is performed, the resin temperature [°C] at the time when the physical property value of "specific heat" is used is acquired, and an accurate "specific heat" corresponding to that resin temperature [°C] is calculated by the function expression Fx (Fxe). Therefore, the calculated accurate physical property value is utilized, for example, for processing for estimating the molten state of plasticized resin (estimated solid phase rate Xcs, estimated resin decomposition rate Xrs, etc.).

0053 As described above, in the calculation processing functional section Fc, when the data conversion processing functional section Fe is not used, the standard value which is set as a physical property value beforehand is used. Namely, since the estimating processing can be performed by using the standard value or the calculated physical property value, depending on the circumstances; i.e., whether or not the detail information relating to the resin is present, molding processing can be performed without fail, in particular, even when the detail information relating to the resin is not present.

0054 Meanwhile, the molding assistance device 1 according to the present embodiment has, as a basic function, a function of assisting the operator to set more desirable molding conditions by estimating the molten state of plasticized resin.

0055 Therefore, a molding condition data setting section Fms in which molding condition data Ds relating to molding conditions are set is provided in the internal memory 21m of the molding machine controller 21, and a setting screen 35 (see FIG. 2) for setting the molding conditions is displayed on the display 5. Although illustration of the specific layout, etc. of this setting screen 35 is omitted, this setting screen 35 functions as a molding condition setting section Fmi. For example, various types of molding condition data Ds, such as screw rotational speed, metering time, back pressure, metering position, forward portion temperature, middle portion temperature, rear portion temperature, cycle time, can be set by using the setting screen 35. Setting of these data can be performed by, for example, input or selection of necessary numerical values through the touch panel 5t.

0056 The molding assistance device 1 includes a calculation expression data setting section Fs stored in the internal memory 21m. In this calculation expression data setting section Fs, solid phase rate calculation expression data Dsc and decomposition rate calculation expression data Dsr are set. The solid phase rate calculation expression data Dsc are data relating to a calculation expression for calculation of the solid phase rate Xc of molten resin in the heating cylinder 4 on the basis of the above-described input data Di and molding condition data Ds. The decomposition rate calculation expression data Dsr are data relating to a calculation expression for calculation of the resin decomposition rate Xr of the screw surface 3f during molding on the basis of the above-described input data Di and molding condition data Ds. In the case where the decomposition rate calculation expression data Dsr are set in addition to the solid phase rate calculation expression data Dsc, the estimated resin decomposition rate Xrs can be easily obtained, because the input data Di used for the calculation processing of the solid phase rate calculation expression data Dsc can also be used for the calculation processing of the decomposition rate calculation expression data Dsr, for example.

0057 The solid phase rate calculation expression proposed by the present applicant in the republished patent publication WO2019-188998 can be utilized as a solid phase rate calculation expression for calculation of the solid phase rate Xc which is the base of the solid phase rate calculation expression data Dsc. Namely, Expression 101 can be used.

$$\text{Solid phase rate } Xc = Cx/Cw$$
$$= (Cx'/Cw) \cdot (1 - ka \cdot \Phi i) \qquad \text{Expression 101}$$

where

$$\Phi i = f\,(Tr,\ Tc) \cdot \Phi e.$$

0058 In these expressions, Cx represents the width of a piece of solid matter at the current position, Cw represents a length obtained by subtracting the flight width from the pitch width, Cx' represents the width of the piece of solid matter one pitch earlier, ka represents an adjustment coefficient, $\Phi i$ represents a melting rate during injection, $\Phi e$ represents a melting rate during extrusion, Tr represents a metering time, and Tc represents a cycle time.

0059 The decomposition rate calculation expression proposed by the present applicant in the republished patent publication WO2019-188998 can also be utilized as a decomposition rate calculation expression for calculation of the resin decomposition rate Xr which is the base of the decomposition rate calculation expression data Dsr. Namely, Expression 102 can be used.

$$\text{Resin decomposition rate } Xr = E \cdot Wa \cdot kb \qquad \text{Expression 102}$$

where

$$E = f\,(W,\ L,\ \sigma,\ \gamma,\ \xi)$$

$$Wa \propto f\,(\Phi m,\ \Phi c,\ Qs).$$

0060 In these expressions, E represents a shearing heat generation amount [MJ] calculated based on the Tadmor model expression that is a total shear heat generation amount obtained by integrating the shearing heat generation amounts in a range from a fullymelted position to a tip end of the screw 3. Wa represents the adhesion work [MJ/square meter] of molten resin and metal, and kb represents an adjustment coefficient determined in consideration of the catalyst effect of the metal. In calculation of the shearing heat generation amount E, W represents the length obtained by subtracting the flight width from the pitch width, L represents a screw spiral length, $\sigma$ represents a shearing stress, $\gamma$ represents a shearing rate, and $\xi$ represents a dimensionless depth. In calculation of the adhesion work Wa, $\Phi m$ represents the work function of the base material metal, $\Phi c$ represents the work function of the metal coated on the base material metal, and Qs represents the amount of oxygen adhering to the outermost surface metal. The oxygen amount Qs can be measured by an X-ray analysis device (EDX device). This adhesion work Wa shows how easily molten resin adheres to the metal.

0061 In the case where, as described above, the decomposition rate calculation expression data Dsr, which are used to obtain the resin decomposition rate Xr of the screw surface 3f during molding on the basis of the input data Di and the molding condition data Ds, are set in the calculation expression data setting section Fs, the estimated resin decomposition rate Xrs can be easily obtained, because the input data Di used for the calculation processing of the solid phase rate calculation expression data Dsc can also be used for the calculation processing of the decomposition rate calculation expression data Drs, for example.

0062 Furthermore, the molding assistance device 1 includes a calculation processing functional section Fc shown in FIG. 2. This calculation processing functional section Fc performs calculation processing by using the above-described solid phase rate calculation expression data Dsc and the above-described decomposition rate calculation expression data Dsr. This calculation processing functional section Fc includes a fiber state calculation processing section Fcf for obtaining an estimated final fiber length Yf and an estimated breakage rate Yn of reinforcing fibers at the time of completion of metering.

0063 In this case, the molding assistance device 1 includes a solid phase rate calculation processing section Fcp for obtaining the solid phase rate Xc of molten resin at the time of completion of metering (i.e., the estimated solid phase rate Xcs) through calculation processing based on the input data Di and the solid phase rate calculation expression data Dsc. In practice, the obtained, estimated solid phase rate Xcs is not necessarily required to be 0. A numerical value of "0.06" is desirably chosen as a judgment criterion, and this numerical value was confirmed from the results of an experiment. Therefore, in the case where the estimated solid phase rate Xcs satisfies the relation of "Xcs $\leq$ 0.06," it is possible to judge that the resin is in a good molten state, and in the case where "Xcs > 0.06," it is possible to judge that melting is insufficient (plasticization is insufficient). As described above, the magnitude of the estimated solid phase rate Xcs serves as an index which shows the molten state (e.g., plasticization of molten resin is insufficient). Notably, since the estimated solid phase rate Xcs shows the melting level of molten resin, the unmelted polymer fraction may be used. In the case where the function of estimating the solid phase rate (Xcs) of molten resin in the heating cylinder 4, as the molten state of plasticized resin, on the basis of the resin data Dr, the molding machine data Dm, and the molding condition data Ds is contained in the calculation processing functional section Fc, in particular, an accurate physical property value of resin can be applied to the estimated solid phase rate Xcs of the molten resin in the heating cylinder 4. Therefore, an accurate and precise estimated solid phase rate Xcs can be obtained.

0064 Also, the molding assistance device 1 includes a decomposition rate calculation processing section Fcr for obtaining the resin decomposition rate Xr of molten resin (i.e., the estimated resin decomposition rate Xrs) through calculation processing based on the input data Di and the decomposition rate calculation expression data Dsr. In the case where the obtained, estimated resin decomposition rate Xrs is greater than 0.00, it is possible to grasp that molten resin is in a deteriorated state (including the case where the risk that the molten resin becomes a deteriorated state is high). Specifically, in the case where the estimated resin decomposition rate Xrs satisfies the relation of "Xrs = 0.00," it is possible to judge that the molten resin has not deteriorated and is in a good molten state, and in the case where "Xrs > 0.00," it is possible to judge that the molten resin is in a deteriorated state or the risk that the molten resin becomes a deteriorated state is high. As described above, the magnitude of the estimated resin decomposition rate Xrs serves as an index which shows the deteriorated state of molten resin which occurs as a result of excessive progress of plasticization.

0065 In the case, as described above, the decomposition rate calculation processing section Fcr for obtaining the estimated resin decomposition rate Xrs through calculation processing based on the input data Di, the molding condition data Ds, and the decomposition rate calculation expression data Dsr is provided in the calculation processing functional section Fc, since the estimated resin decomposition rate Xrs can be easily obtained by the calculation processing, it is possible to accurately grasp the deteriorated state of molten resin from the estimated resin decomposition rate Xrs. Accordingly, it becomes possible to set a proper range of the molten state by two limit points; i.e., a limit point on one side (side where plasticization is insufficient) of the range of the molten state determined by the estimated solid phase rate Xcs and a limit point on the other side (side where plasticization is excessive) of the range of the molten state determined by the estimated resin decomposition rate Xrs. Thus, moldability and molding quality can be further enhanced. In the case where the function of estimating the resin decomposition rate (Xrs) of the screw surface 3f during molding, as the molten state of plasticized resin, on the basis of the resin data Dr, the molding machine data Dm, and the molding condition data Ds is contained in the calculation processing functional section Fc, in particular, an accurate physical property value of resin can be applied to the estimated resin decomposition rate Xrs of the screw surface 3f during molding. Therefore, an accurate and precise estimated resin decomposition rate Xrs can be obtained.

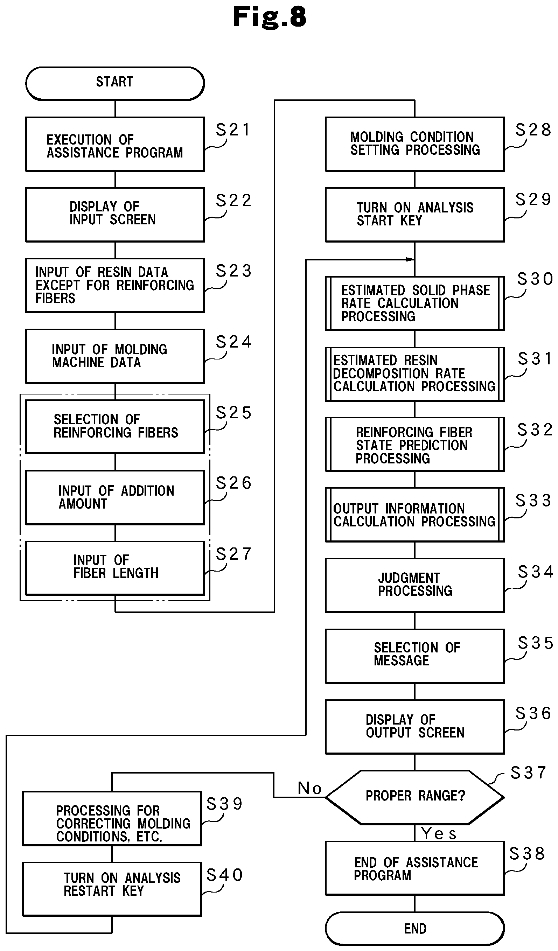

0066 Next, a molding assistance method performed by using the molding assistance device 1 of the present embodiment will be described in accordance with the flowchart shown in FIG. 8 and with reference to the drawings.

0067 Basically, this molding assistance method performed by using the molding assistance device 1 can be used when molding conditions are set before start of production, and is executed by the assistance program Ps stored in the internal memory 21m.

0068 First, the operator starts up the assistance program Ps (step S21). As a result, an input screen 31 shown in FIG. 3 and having a setting function is displayed on the display 5 (step S22). The operator inputs various types of necessary data by using the data input section Fi of the input screen 31. Namely, the operator inputs the resin data Dr (step S23) and inputs the molding machine data Dm (step S24).

0069 Furthermore, the operator inputs or selects pieces of information relating to the reinforcing fibers, as the resin data Dr, by using the reinforcing fiber input section 32. Namely, the operator selects the type of the reinforcing fibers by using the fiber type input section 32a (step S25), inputs the addition amount of the reinforcing fibers by using the addition amount input section 32b (step S26), and selects or inputs a fiber length by using the fiber length input section 32c (step S27). After that, processing of setting molding conditions for molding by the injection molding machine M is performed (step S28). In this case, in accordance with an ordinary setting procedure, a predetermined setting scree 35 (its detailed view is omitted) is displayed on the display 5. The operator sets the molding conditions (molding condition data Ds) relating to various physical quantities such as screw rotational speed, metering time, back pressure, metering position, forward portion temperature, middle portion temperature, rear portion temperature, cycle time, etc.

0070 Upon completion of the series of data input processing and molding condition setting processing, the operator turns on (touches) a "flow analysis start" key 38 displayed on the input screen 31 shown in FIG. 3 (step S29). As a result, in the solid phase rate calculation processing section Fcp, calculation processing based on the inputted input data Di, the set molding condition data Ds, and the solid phase rate calculation expression data Dsc is performed (step S30). As a result of this calculation processing, the estimated solid phase rate Xcs based on the input data Di and the molding condition data Ds is calculated. Also, in the decomposition rate calculation processing section Fcr, calculation processing based on the input data Di, the molding condition data Ds, and the decomposition rate calculation expression data Dsr is performed (step S31). As a result of this calculation, the estimated resin decomposition rate Xrs based on the input data Di and the molding condition data Ds is calculated.

0071 Furthermore, the estimated final fiber length Yf and the estimated breakage rate Yn of the reinforcing fibers in discharged resin at the time of completion of metering are obtained by the fiber state calculation processing section Fcf. In this case, the reinforcing fiber breakage rate Yn and the final fiber length Yf are estimated on the basis of the input data Di by using a previously set calculation expression, data table, or the like (step S32).

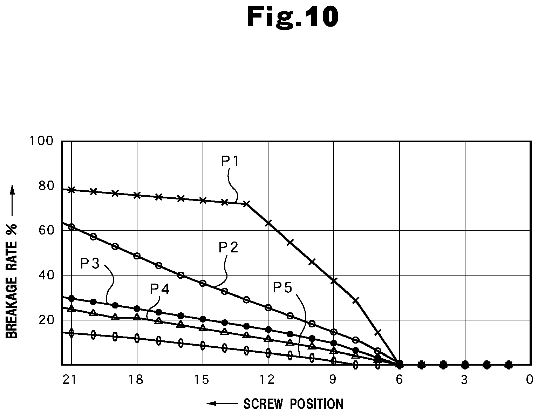

0072 In this case, in the fiber state calculation processing section Fcf, the reinforcing fiber breakage rate Yn is estimated on the basis of the input data Di by using a previously set calculation expression, data table, or the like. This estimation processing is performed as follows. FIG. 10 shows the results of simulation performed by the assistance program Ps so as to obtain the relation between screw position and the breakage rate Yn [%] in the heating cylinder 4. In FIG. 10, a curve P1 (sample 1) shows the above-described relation for the case where "long glass fibers" were added to polypropylene resin (PP) in an amount of 30 [wt%], a curve P2 (sample 2) shows the above-described relation for the case where "long glass fibers" were added to PP in an amount of 10 [wt%], a curve P3 (sample 3) shows the above-described relation for the case where "short glass fibers" were added to PP in an amount of 30 [wt%], a curve P4 (sample 4) shows the above-described relation for the case where "short glass fibers" were added to PP in an amount of 10 [wt%], and a curve P5 (sample 5) shows the above-described relation for the case where "short glass fibers" were added to polyamide 66 resin (PA66) in an amount of 30 [wt%]. In the cases shown in FIG. 10, the sample 5 shows the situation where reinforcing fibers are most unlikely to be broken. Conceivably, the reason of this is that the viscosity of the resin is low and the plasticization time is short.

0073 Accordingly, in the fiber state calculation processing section Fcf, such characteristic curves are registered in the form of a data table, and the type of resin, the type of reinforcing fibers, the addition amount of reinforcing fibers, the molding conditions, etc. are linked to the data table. Thus, on the basis of the input data Di, corresponding characteristic curve P1, etc. can be selected and displayed.

0074 Furthermore, the fiber state calculation processing section Fcf has a function of obtaining the estimated final fiber length Yf of reinforcing fibers at the time of completion of metering. In the case where the function of obtaining the estimated final fiber length Yf is provided, since the change state of the reinforcing fibers can be grasped accurately by combining the estimated final fiber length Yf with the estimated breakage rate Yn, the strength and quality of molded products can be increased by optimizing the state of reinforcing fibers in the molded products. Data of the estimated final fiber length Yf were obtained by sampling a last portion of discharged resin and actually measuring the remaining fibers by an ashing method.

0075 Also, other various pieces of output information (specifically, carbonization generation rate [%], heat generation amount [°C], residual solid matter amount [%], plasticization time [s], etc.) are obtained by calculation processing or the like (step S33).

0076 Upon completion of the calculation processing, including estimation processing relating to the above-described output information, in the judgment processing section Fcj, judgment processing is performed for the estimated solid phase rate Xcs, the estimated resin decomposition rate Xrs, the estimated final fiber length Yf, the estimated breakage rate Yn, and the various types of pieces of output information in accordance with predetermined judgment criteria (step S34). In the case where, as described above, the an judgment processing section Fcj, which performs judgment processing for the magnitude of at least one or two or more of the estimated solid phase rate Xcs, the estimated final fiber length Yf, the estimated breakage rate Yn, and the estimated resin decomposition rate Xrs, and outputs assistance message data md corresponding to the judgment result mj; i.e., the result of the judgment processing, is provided in the calculation processing functional section Fc, the operator can easily grasp the molten state of molten resin, which is difficult to judge, and can quickly perform necessary countermeasure processing.

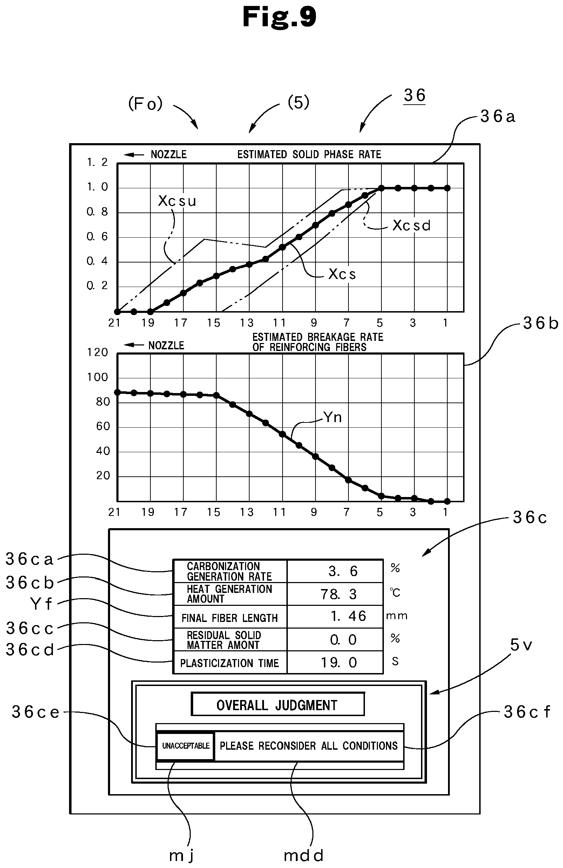

0077 Furthermore, on the basis of the judgment result mj (i.e., the result of the judgment processing), assistance message data md corresponding to this judgment result mj are selected and outputted (step S35). An assistance message mdd based on the assistance message data md outputted from the judgment processing section Fcj is displayed on a message display section 5v of the display 5. Namely, since the output screen 36 shown in FIG. 9 is displayed on the display 5 by the output processing functional section Fo, the operator can check the obtained various pieces of output information (step S36). In the case where, as described above, the function of displaying, on the message display section 5v of the display 5, the assistance message mdd based on the assistance message data md outputted from the judgment processing section Fcj is provided in the output processing functional section Fo, the operator can easily grasp the molten state of the molten resin, which is difficult to judge, by the visual means and can quickly perform necessary countermeasure processing. Therefore, production of molded products can be made more efficient.

0078 The output screen 36 has an estimated solid phase rate display section 36a provided in an upper part, an estimated reinforcing fiber breakage rate display section 36b provided in a middle part, and a final data display section 36c provided in a lower part and including a display section for displaying other data. Accordingly, the output screen 36 functions as the output processing functional section Fo which displays on the display 5 at least one or two or more pieces of information relating to the estimated solid phase rate Xcs and the estimated breakage rate Yn. On the output screen 36, the estimated solid phase rate display section 36a shows a graph of estimated solid phase rate in which the horizontal axis shows screw position, and the vertical axis shows the estimated solid phase rate Xcs obtained through calculation. A characteristic curve of an estimated solid rate Xcs illustrated in FIG. 9 shows a nearly normal state. Of imaginary line curves illustrated as other patterns, the imaginary line curve Xcsd shows a state in which plasticization proceeds excessively because of an excessively early melting position, and the imaginary line curve Xcsu shows a state in which plasticization is insufficient because of an excessively late melting position.

0079 Also, the estimated breakage rate display section 36b of FIG. 9 shows a graph of estimated reinforcing fiber breakage rate in which the horizontal axis shows screw position, and the vertical axis shows the estimated breakage rate Yn obtained through calculation. The characteristic curve of the estimated breakage rate Yn displayed in the estimated breakage rate display section 36b of the output screen 36 becomes the same as the characteristic curve showing the results of the above-described simulation shown in FIG. 10.

0080 Since the estimated solid phase rate Xcs and the estimated breakage rate Yn are displayed graphically as described above, it is possible to easily predict whether or not they are appropriate on the basis of their graph patterns. Furthermore, in the final data display section 36c, a carbonization generation rate 36ca (estimated resin decomposition rate Xrs), a heat generation amount 36cb, a residual solid matter amount 36cc, and a plasticization time 36cd are displayed, in the form of numerical values, in this order from the upper side, and the final fiber length Yf is displayed, in the form of a numerical value, as the state of the added reinforcing fibers. On the lower side of the final data display section 36c, the message display section 5v, which is composed of a judgment result display section 36ce and an assistance message display section 36cf, is provided. In the judgment result display section 36ce, the judgment result mj (the result of judgment based on estimation (prediction) of various type of data) is displayed by displaying "Best," "Good," "Acceptable," "Unacceptable," etc. (in the illustrated example, " Unacceptable" is displayed), and an assistance message mdd based on this judgment result mj is displayed. In the illustrated example, an assistance message indicating that "Please reconsider all conditions" is displayed.

0081 In the case where the operator checks the pieces of output information, finds that the judgment result mj (the result of the judgment processing) is, for example, "Best," "Good," or "Acceptable," and determines that molding is possible, the operator ends the assistance program (steps S37 and S38). Meanwhile, in the case where the judgment result mj (the result of the judgment processing) is "Unacceptable," the operator performs correction processing such as correction of the molding condition data Ds or changing of the input data Di (step S39). Upon completion of correction, the operator turns on (touches) an "analysis restart" key (step S40). The above-described "flow analysis start" key 38 may be used as this "analysis restart" key. As a result, a series of processing in step S30 and steps subsequent thereto are performed (step S30, etc.). Notably, FIG. 1 shows an example case where the judgment result mj (the result of the judgment processing) is "Unacceptable," and the assistance message mdd indicating that "Please reconsider all conditions" is displayed.

0082 The molding assistance device 1 according to the present embodiment includes, as basic configurational elements,

the resin item selection section 6 for selecting an item Drc relating to the type of resin and an item Drm relating to a predetermined physical property of the resin from the resin data Dr set in the resin data setting section Fmr;

the physical property value input section 7 for inputting a plurality of different resin temperatures Et relating to the selected resin and physical property values Em corresponding to the respective resin temperatures Et;

the physical property value conversion section 8 for obtaining a physical property value Em corresponding to any resin temperature Et;

the data conversion processing functional section Fe which operates, when a molten state is estimated, so as to provide to the calculation processing functional section Fc a resin temperature Et at the time of the estimation and the physical property value Em corresponding to the resin temperature Et and obtained by the physical property value conversion section 8.

Therefore, when the molten state of plasticized resin is estimated, an accurate physical property value corresponding to the resin temperature can be used. Thus, even a novice operator or the like who does not have much experience can quickly perform estimation of an accurate and precise molten state, because manual correction or alteration becomes unnecessary, can set accurate molding conditions, and can secure high molding quality.

0083 The best embodiment has been described in detail. However, the present invention is not limited to such embodiment, and, as to structures of details, shapes, raw materials, materials, quantities, numerical values, methods, etc., alteration, addition, and deletion can be performed arbitrarily within a range not departing from the gist of the present invention.

0084 For example, conceptually, the resin data Dr contain resin related data which relate to not only resin itself but also reinforcing fibers (shown as an example) which are added to the resin, and the molding machine data Dm contain molding machine related data which relate to not only the molding machine but also the mold, peripheral devices of the molding machine, etc. Although the data conversion processing functional section Fe is desirably configured to have a function of displaying on the display 5 the detail data input screen Vie having the resin item selection section 6 and the physical property value input section 7, detail data may be written directly into the internal memory 21m or the like or transferred thereto without displaying the detail data on the display 5. The physical property value conversion section 8 has the function of performing conversion by using the function expression Fx obtained from physical property values corresponding to a plurality of different resin temperatures or the corrected function expression Fxe. Alternatively, the physical property value conversion section 8 has the function of performing conversion by using the data table obtained from physical property values corresponding to a plurality of different resin temperatures or the corrected data table. However, other means having the same function may be used. For example, there may be used mean for setting stepwise numeral values such that a physical property value K1 is set when the resin temperature is 50 to 100 [°C], a physical property value K2 is set when the resin temperature is 101 to 150 [°C], a physical property value K3 is set when the resin temperature is 151 to 200 [°C], and a physical property value K4 is set when the resin temperature is 201 to 250 [°C]. In the calculation processing functional section Fc, when the data conversion processing functional section Fe is not used, the standard value set beforehand as a physical property value can be used. This standard value may be a single standard value or a plurality of selectable standard values. The calculation processing functional section Fc has the function of estimating the estimated solid phase rate Xcs and the estimated resin decomposition rate Xrs. However, estimation may be performed for matters relating to the additive added to resin (the estimated breakage rate Yn, etc. shown as examples) or resin containing the additive.

**Industrial Applicability**

0085 The molding assistance device according to the present invention can be used for various injection molding machines which perform molding by injecting plasticized molten resin by means of a screw into a mold, thereby filling the mold with the resin.

**Claims**

1. A molding assistance device for an injection molding machine comprising a resin data setting section in which resin data relating to resin are set, a molding machine data setting section in which molding machine data relating to a molding machine are set, a molding condition data setting section in which molding condition data relating to molding conditions are set, a calculation processing functional section which estimates a molten state of plasticized resin on the basis of the resin data, the molding machine data, and the molding condition data, and an output processing functional section which visually displays on a display the molten state estimated by the calculation processing functional section, the molding assistance device being **characterized by** comprising:

a resin item selection section for selecting an item relating to a type of resin and an item relating to a predetermined physical property of the resin from the resin data set in the resin data setting section;

a physical property value input section for inputting a plurality of different resin temperatures relating to the selected resin and physical property values corresponding to the respective resin temperatures;

a physical property value conversion section for obtaining a physical property value corresponding to any resin temperature; and

a data conversion processing functional section which operates, when the molten state is estimated, so as to provide to the calculation processing functional section a resin temperature at the time of the estimation and the physical property value corresponding to the resin temperature and obtained by the physical property value conversion section.

2. A molding assistance device for an injection molding machine according to claim 1, wherein the data conversion processing functional section has a function of displaying on the display a detail data input screen having the resin item selection section and the physical property value input section.

3. A molding assistance device for an injection molding machine according to claim 1, wherein the physical property value conversion section has a function of performing conversion by using a function expression obtained from physical property values corresponding to the plurality of different resin temperatures or a corrected function expression obtained by correcting the function expression.

4. A molding assistance device for an injection molding machine according to claim 1, wherein the physical property value conversion section has a function of performing conversion by using a data table obtained from physical property values corresponding to the plurality of different resin temperatures or a corrected data table obtained by correcting the data table.

5. A molding assistance device for an injection molding machine according to claim 1, wherein, when the data conversion processing functional section is not used, the calculation processing functional section uses a standard value set beforehand as the physical property value.

6. A molding assistance device for an injection molding machine according to claim 1 or 5, wherein the calculation processing functional section has a function of estimating, as the molten state of plasticized resin, a solid phase rate of molten resin in a heating cylinder on the basis of the resin data, the molding machine data, and the molding condition data.

7. A molding assistance device for an injection molding machine according to claim 1 or 5, wherein the calculation processing functional section has a function of estimating, as the molten state of plasticized resin, a resin decomposition rate of a screw surface during molding on the basis of the resin data, the molding machine data, and the molding condition data.

# Fig.1

| | | FILE NAME | |
|---|---|---|---|
| 1 | PP | SPECIFIC HEAT | CSV |
| 2 | PP | THERMAL CONDUCTIVITY | CSV |
| 3 | pp | TG/DTA | CSV |
| 4 | pp | DSC | CSV |
| 5 | pp | DECOW>OSITION RATE | rQV |
| 6 | PP | WATER ABSORPTION | rw |
| 7 | PP | SPECIFIC HEAT | TXT |

PP (Grade L1 225)

SPECIFIC HEAT | THERMAL CONDUCTIVITY | TG/DTA (THERMAL ANALYSIS) | DSC (THERMAL ANALYSIS) | DECOMPOSITION RATE | WATER ABSORPTION | SPECIFIC GRAVITY

| | TEMPERATURE (Cc) | SPECIFIC HEAT (J/kg.K) |
|---|---|---|
| 1 | 32 | 1220 |
| 2 | 44 | 1240 |
| 3 | 51 | 1260 |
| 4 | 65 | 1270 |
| 5 | 70. 5 | 1280 |
| 6 | 83. 5 | 1350 |
| 7 | 90. 5 | 1400 |

ACCURACY RANK  B

CREATE GRAPH

A
B
C

**Fig.2**

# Fig.3

# Fig.4

| RANK | FUNCTION EXPRESSION |
|------|---------------------|
| A | $(mx+kb) + (nx+ka)$ |

# Fig.5

| RANK | FUNCTION EXPRESSION |
|------|---------------------|
| B | $(nx+ka)$ |

# Fig.6

START

EXECUTION OF ASSISTANCE PROGRAM — S1

DISPLAY OF INPUT SCREEN — S2

TURN ON INFORMATION INPUT KEY — S3

DISPLAY OF INFORMATION INPUT SCREEN — S4

SELECTION OF RESIN — S5

SELECTION OF PHYSICAL PROPERTY — S6

INPUT OF DATA — S7

COMPLETELY END? — S8
No

Yes

FUNCTION EXPRESSION CREATION PROCESSING — S9

END? — S10
No

SG

Yes

CHANGE REGISTRATION PROCESSING — S11

END

# Fig.7

```
                              ┊
          No     ╱COMPLETELY END?╲  ⎞S8
                 ╲               ╱
                    Yes
                                      ⎞SG
              ┌──────────────────┐
              │   SELECTION OF   │  S91
              │  ACCURACY RANK   │
              └──────────────────┘
              ┌──────────────────┐
              │  TURN ON GRAPH   │  S92
              │  CREATION KEY    │
              └──────────────────┘
              ┌──────────────────┐
              │ AUTOMATIC GRAPH  │  S93
              │CREATION PROCESSING│
              └──────────────────┘
              ┌──────────────────┐
              │ DISPLAY PROCESSING│  S94
              └──────────────────┘
              ┌──────────────────┐
              │      CHECK       │  S95
              └──────────────────┘
      Yes    ╱       OK?         ╲  S96
             ╲                   ╱
                    No
              ┌──────────────────┐
              │   CORRECTION     │  S97
              │   PROCESSING     │
              └──────────────────┘
              ┌──────────────────┐
              │  TURN ON RANK    │  S98
              │ REGISTRATION KEY │
              └──────────────────┘
              ┌──────────────────┐
              │  REGISTRATION    │  S99
              │  OF RANKING      │
              └──────────────────┘
      Yes    ╱  DOES ANOTHER     ╲  S100
             ╲   RANK EXIST?     ╱
                    No
              ┌──────────────────┐
              │CHANGE REGISTRATION│  S11
              │   PROCESSING     │
              └──────────────────┘
                      ┊
```

# Fig.8

```
                  START

        EXECUTION OF          S21        MOLDING CONDITION       S28
        ASSISTANCE PROGRAM                SETTING PROCESSING

        DISPLAY OF            S22        TURN ON ANALYSIS        S29
        INPUT SCREEN                      START KEY

        INPUT OF RESIN DATA   S23        ESTIMATED SOLID PHASE   S30
        EXCEPT FOR REINFORCING            RATE CALCULATION
        FIBERS                            PROCESSING

        INPUT OF MOLDING     S24         ESTIMATED RESIN         S31
        MACHINE DATA                      DECOMPOSITION RATE
                                          CALCULATION PROCESSING

        SELECTION OF         S25         REINFORCING FIBER       S32
        REINFORCING FIBERS                STATE PREDICTION
                                          PROCESSING

        INPUT OF ADDITION    S26         OUTPUT INFORMATION      S33
        AMOUNT                            CALCULATION PROCESSING

        INPUT OF             S27         JUDGMENT                S34
        FIBER LENGTH                      PROCESSING

                                         SELECTION OF            S35
                                          MESSAGE

                                         DISPLAY OF              S36
                                          OUTPUT SCREEN

        PROCESSING FOR       S39              PROPER RANGE?      S37
        CORRECTING MOLDING          No
        CONDITIONS, ETC.

        TURN ON ANALYSIS     S40    Yes
        RESTART KEY                      END OF ASSISTANCE       S38
                                          PROGRAM

                                              END
```

# Fig.9

(Fo)　　(5)　　<u>36</u>

36a

ESTIMATED SOLID PHASE RATE
← NOZZLE

Xcsu　Xcsd　Xcs

21 19 17 15 13 11 9 7 5 3 1

36b

ESTIMATED BREAKAGE RATE
OF REINFORCING FIBERS
← NOZZLE

Yn

21 19 17 15 13 11 9 7 5 3 1

36c

| 36ca | CARBONIZATION GENERATION RATE | 3. 6 | % |
| 36cb | HEAT GENERATION AMOUNT | 78. 3 | ℃ |
| Yf | FINAL FIBER LENGTH | 1. 46 | mm |
| 36cc | RESIDUAL SOLID MATTER AMONT | 0. 0 | % |
| 36cd | PLASTICIZATION TIME | 19. 0 | S |

5v

36ce

OVERALL JUDGMENT

UNACCEPTABLE　PLEASE RECONSIDER ALL CONDITIONS

36cf

mj　mdd

# Fig.10

## INTERNATIONAL SEARCH REPORT

International application No.

**PCT/JP2022/030523**

### A. CLASSIFICATION OF SUBJECT MATTER

***B29C 45/76***(2006.01)i
FI:  B29C45/76

According to International Patent Classification (IPC) or to both national classification and IPC

### B. FIELDS SEARCHED

Minimum documentation searched (classification system followed by classification symbols)

B29C45/76

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2002-331558 A (FANUC LTD) 19 November 2002 (2002-11-19) paragraphs [0019], [0046]-[0079] | 1-7 |
| Y | JP 2014-737 A (SUMITOMO HEAVY IND LTD) 09 January 2014 (2014-01-09) paragraph [0023] | 1-7 |

☐ Further documents are listed in the continuation of Box C.          ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **09 September 2022** | **20 September 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/030523**

| Patent document cited in search report | | | Publication date (day/month/year) | Patent family member(s) | Publication date (day/month/year) |
|---|---|---|---|---|---|
| JP | 2002-331558 | A | 19 November 2002 | US 2002/0153630 A1 paragraphs [0027], [0079]-[0114] | |
| JP | 2014-737 | A | 09 January 2014 | (Family: none) | |

Form PCT/ISA/210 (patent family annex) (January 2015)

**REFERENCES CITED IN THE DESCRIPTION**

**Patent documents cited in the description**

- JP 2015123668 A

- WO 2019188998 A